Europäisches Patentamt

European Patent Office

Office européen des brevets

(19)

(11) Veröffentlichungsnummer: **0 205 987**
**B1**

# EUROPÄISCHE PATENTSCHRIFT

(12)

(45) Veröffentlichungstag der Patentschrift:
01.08.90

(21) Anmeldenummer: 86107364.1

(22) Anmeldetag: 30.05.86

(51) Int. Cl.⁵: **A01B 3/421**, A01B 3/42

(54) Dreheinrichtung für Drehpflüge.

(30) Priorität: 27.06.85 DE 3522921

(43) Veröffentlichungstag der Anmeldung:
30.12.86 Patentblatt 86/52

(45) Bekanntmachung des Hinweises auf die Patenterteilung:
01.08.90 Patentblatt 90/31

(84) Benannte Vertragsstaaten:
AT BE DE FR GB IT NL

(56) Entgegenhaltungen:
EP-A- 0 015 777
EP-A- 0 044 876
DE-A- 2 831 381

(73) Patentinhaber: Rabewerk GmbH + Co., D-4515 Bad Essen(DE)

(72) Erfinder: Schroer, Friedrich, Dipl.-Ing., Im Weidengrund 5, D-4515 Bad Essen 1(DE)

(74) Vertreter: Missling, Arne, Dipl.-Ing., Patentanwalt Bismarckstrasse 43, D-6300 Giessen(DE)

ACTORUM AG

## Beschreibung

Die Erfindung betrifft eine Vorrichtung zum Drehen des im Pflugvordergestell drehbar gelagerten Pflugrahmens gemäß dem Oberbegriff von Anspruch 1.

Eine Vorrichtung der vorstehend genannten Art ist aus der DE-A-2 831 381 bekannt. Bei dieser Vorrichtung werden zum Wenden der Pflugkörper zwei Drehzylinder eingesetzt, von denen der eine an einem mit der Drehachse verbundenen Kurbelarm befestigt ist, während der andere Drehzylinder an einem zweiten, mit der Drehachse verbundenen Kurbelarm angreift. Dieser zweite Kurbelarm ist entweder um einen bestimmten Winkelbereich drehbar auf der Drehachse angeordnet oder er besteht aus einer Kurvenscheibe, in der der Angriffspunkt des Drehzylinders verschiebbar ist, ohne daß eine Drehung des Pflugrahmens eintritt. Die beiden Drehzylinder haben ihre beiden Anlenkpunkte oberhalb der Drehachse. Das von dem einen Drehzylinder ausgeübte Drehmoment wird um so größer, je weiter der Drehvorgang fortgeschritten ist, während das Drehmoment des anderen Drehzylinders entsprechend kleiner wird. In der Arbeitsstellung bilden die Anschlußpunkte des zweiten Drehzylinders und die Drehachse im wesentlichen eine Totpunktlage. Der eine Drehzylinder ist als Hauptdrehzylinder ausgebildet, während der andere Drehzylinder kleiner gehalten werden kann und nur die Arbeit verrichten muß, um den ersten Drehzylinder und damit den Schwerpunkt des drehbaren Pflugteils sicher über die Totpunktlage zu bringen. Die bekannte Ausführungsform erfordert jedoch einen aufwendigen Kurbelmechanismus, wobei der zweite, kleinere Drehzylinder über seine Totpunktlage durch Reibung aufgrund der Drehbewegung des ersten Drehzylinders gebracht werden muß. Eine derartige Anordnung funktioniert nicht immer zufriedenstellend, insbesondere nicht bei schwierigen Pflugstellungen, z. B. beim Pflügen am Hang.

Der Erfindung liegt die Aufgabe zugrunde, eine Vorrichtung zum Drehen des im Pflugvordergestell drehbar gelagerten Pflugrahmens der eingangs genannten Art so auszubilden, daß diese im Vergleich zum Stand der Technik wesentlich einfacher im Aufbau und damit kostengünstiger ist und unter allen Betriebsbedingungen ein sicheres Drehen gewährleistet.

Diese Aufgabe wird mit den Merkmalen des kennzeichnenden Teils des Anspruches 1 gelöst. Ausgestaltungen sind Gegenstand der Ansprüche 2 bis 6.

Bei einer Vorrichtung zum Drehen des Pflugrahmens gemäß der Erfindung können die Anschlußpunkte und die Drehachse in einer Ebene liegen. Vorzugsweise befindet sich der Anschlußpunkt des zweiten Drehzylinders an der Drehachse bzw. an einem mit ihr drehfest verbundenen Kurbelarm stirnseitig der Drehachse, so daß der Drehzylinder mit seiner Kolbenstange daran stirnseitig frei vorbeischwenken kann. Vorteilhaft wird man den zweiten Drehzylinder in der Arbeitsstellung im wesentlichen horizontal anordnen. Der Drehzylinder wie auch der Kurbelarm kann relativ klein gewählt werden, da dieser lediglich die Aufgabe hat, den Schwerpunkt sicher über die Totpunktlage soweit zu verschieben, daß der erste Drehzylinder, d. h. der Hauptdrehzylinder, die Drehung vollendet.

Beide Drehzylinder sind als doppelt wirkende Kolbenzylinderdreheinheiten ausgebildet, wobei die beiden Drehzylinder vorteilhaft jeweils an zwei zu einem gemeinsamen Steuerventil führenden Leitungen angeschlossen sind. Lediglich der erste Drehzylinder, der die Hauptdreharbeit zu leisten hat, braucht während der Drehbewegung umgesteuert zu werden, und zwar in der Totpunktlage. Hierzu ist in die zu diesem Drehzylinder abzweigenden Leitungen ein Steuerventil eingeschaltet, mit dem in der Totpunktlage eine Umsteuerung bewirkt wird, so daß der erste Drehzylinder nunmehr seinen zweiten Arbeitshub beginnt. Diese Umsteuerung kann selbsttätig in Abhängigkeit der Drehbewegung erfolgen oder aber auch von Hand, so daß die erste Drehhälfte automatisch in der Totpunktlage endet. Der zweite Drehzylinder hingegen beendet die Drehbewegung der Pflugkörper in einem einzigen Hub, wobei sein wirksamer Dreharm in der Arbeitsstellung gleich Null ist, während er in der halbgedrehten Stellung, d.h. in der Totpunktlage, einen maximal wirksamen Hebelarm aufweist.

Die Umsteuerung für den ersten Drehzylinder kann von Hand erfolgen oder aber auch selbsttätig durch die Drehbewegung, oder aber auch durch in der Kolben-Zylinder-Einheit angeordnete Vorrichtungen. Hierbei ist es auch denkbar, die automatische Drehbewegung mit der Handumsteuerung zu kombinieren, so daß wahlweise selbsttätig eine vollständige Drehung oder aber eine halbe Drehung des Pfluges ausgeführt wird.

Gemäß einem weiteren Vorschlag der Erfindung können bei Pflügen, bei denen der Pflugrahmen zum Pflugvordergestell um eine lotrechte Achse verschwenkbar ist und die Verschwenkbewegung mittels eines doppelt wirkenden Hydraulikzylinders erfolgt, die Druckmittelleitungen zu diesem Hydraulikzylinder an die zum ersten Drehzylinder führenden und dem Steuerventil nachgeschalteten Leitungen angeschlossen werden. Hierdurch ist sichergestellt, daß mit Beginn der Drehung der Pflugrahmen so verschwenkt wird, daß sein Schwerpunkt in oder in die Nähe der reellen oder ideellen Drehachse verschoben wird, so daß die notwendige Drehenergie verringert wird. Nach halber Drehung der Pflugkörper und Umschalten der Hubbewegung des ersten Zylinders wie auch des Verschiebezylinders wird der Schwerpunkt wieder in seine Ausgangsstellung verschoben, so daß mit Abschluß der Drehbewegung der Pflugrahmen wieder seine Arbeitsstellung einnimmt.

Weitere vorteilhafte Ausgestaltungen der Erfindung gehen aus den Unteransprüchen in Verbindung mit Beschreibung und Zeichnung hervor.

Ein Ausführungsbeispiel der Erfindung ist im folgenden anhand der Zeichnung näher beschrieben, in dieser zeigen:

Fig. 1 eine Draufsicht auf einen Pflug mit einer erfindungsgemäßen Drehvorrichtung,

Fig. 2 in schematischer Darstellung die Drehvorrichtung nach Fig. 1 in der Arbeitsstellung und

Fig. 3 die gleiche Drehvorrichtung in einer Stellung nahe der Totpunktlage des ersten Drehzylinders.

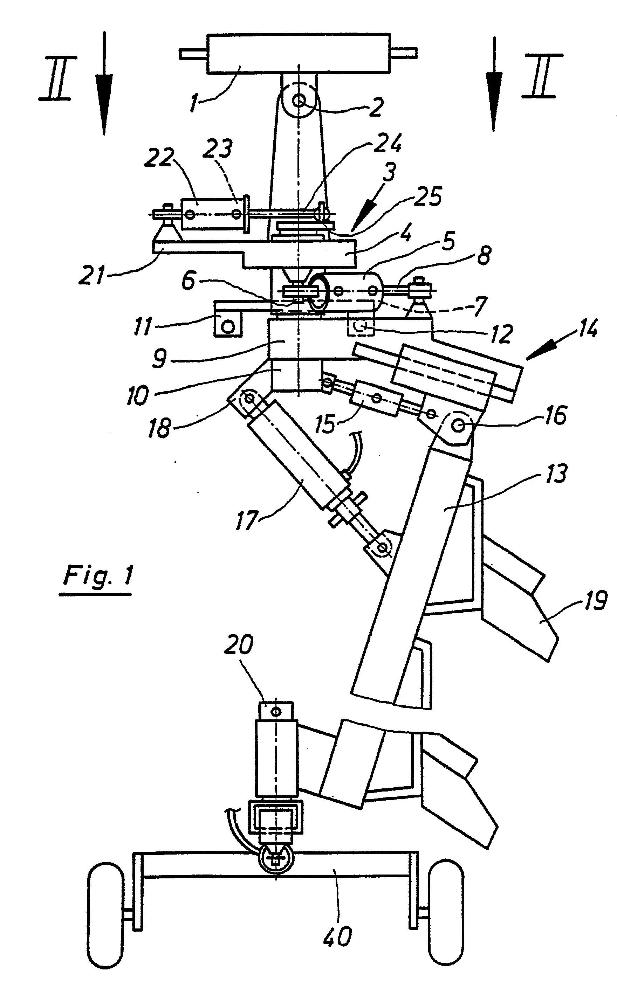

Der in der Fig. 1 dargestellte Drehpflug hat eine Pflugkoppel 1, an der über ein lotrecht liegendes Gelenk 2 das Pflugvordergestell 3 angeschlossen ist. Das Pflugvordergestell 3 weist einen Turm 4 auf, an dem ein doppelt wirkender Drehzylinder 5 an einer Achse 6 angeschlossen ist. Der Drehzylinder 5 besteht aus einem Kolben 7 sowie einer Kolbenstange 8. Die Kolbenstange 8 ist an einem Kurbelarm 9 angeschlossen, der drehfest auf einer im Turm 4 drehbar gelagerten Drehachse 10 befestigt ist. Am Turm 4 sind zwei Anschläge 11, 12 angeordnet, auf die sich der Kurbelarm 9 legt und die die jeweiligen Arbeitsstellungen des Pflugrahmens 13 bestimmen. Am Kurbelarm 9 ist der Pflugrahmen 13 über eine Kulissenführung 14 verschiebbar gelagert, wobei die Verschiebung mittels eines Spannschlosses 15 bewirkt wird, das einerseits an der Kulissenführung 14 und andererseits an der Drehachse 10 angreift.

An der Kulissenführung 14 ist über ein Gelenk 16 der Pflugrahmen 13 angeschlossen. Am Pflugrahmen 13 greift ein doppeltwirkender Verschiebezylinder 17 an, dessen anderes Ende an einem drehfest mit der Drehachse 10 verbundenen Arm 18 angreift. Am Pflugrahmen sind in bekannter Weise Pflugkörper 19 angeordnet. Das hintere Ende des Pflugrahmens 13 wird von einem Karren 40 getragen, der ein Drehlager 20 aufweist, über das sich der Pflugrahmen 13 gegenüber dem Karren 40 abstützt.

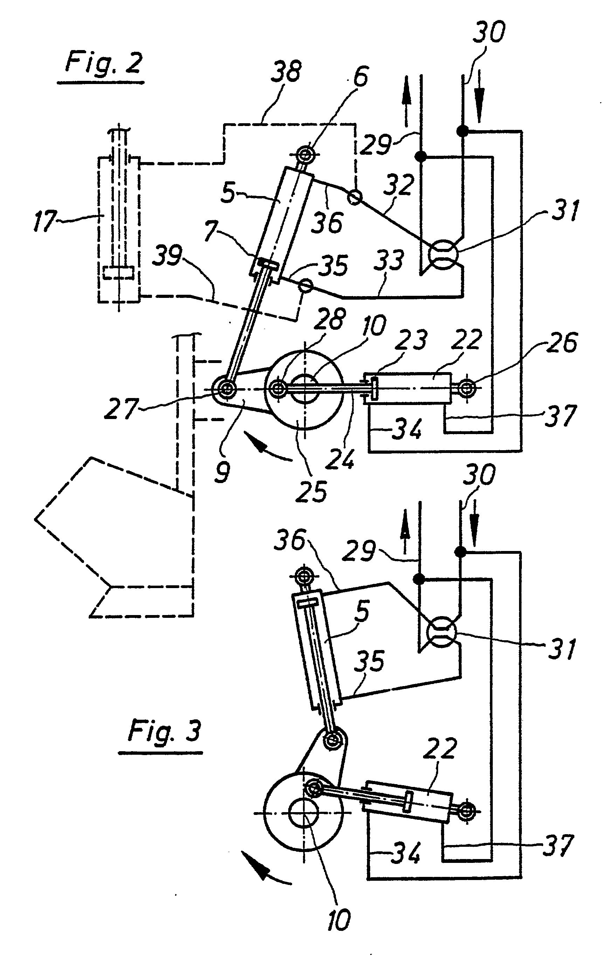

Am Turm 4 ist ein im wesentlichen horizontal liegender Arm 21 angeordnet, an dessen Ende ein doppeltwirkender zweiter Drehzylinder 22 drehbar angeordnet ist. Dieser Drehzylinder 22 hat einen Kolben 23 und eine Kolbenstange 24, die mit einem Anschlußpunkt 28 an einem Kurbelarm 25 drehbar angreift, der drehfest mit dem vorderen Ende der Drehachse 10 verbunden ist. Der Anschlußpunkt 28 kann auch einen die Drehachse umgreifenden (nicht gezeichneten) Bügel aufweisen. In der Arbeitsstellung von Fig. 1 liegen die Anschlußpunkte 26, 28 des Drehzylinders 22 im wesentlichen horizontal (vergl. Fig. 2).

In den Fig. 2 und 3 ist die Drehvorrichtung des Pfluges nach Fig. 1 schematisiert dargestellt. Die Fig. 2 zeigt die Drehvorrichtung in der Arbeitsstellung, Fig. 3 hingegen kurz nach Überschreitung der Totpunktlage, d. h. der halbgedrehten Stellung des Pflugrahmens.

Der Angriffspunkt 6 des ersten Drehzylinders 5 liegt, bezogen auf die Drehachse 10, in einer Ebene, die sich genau senkrecht erstreckt zu einer Ebene, in der der Angriffspunkt 26 des zweiten Drehzylinders 22, bezogen auf die Drehachse 10, liegt. Die beiden Angriffspunkte 27, 28 des ersten wie des zweiten Drehzylinders an ihren Kurbelarmen 9, 25 liegen in einer Ebene, wobei diese im Ausführungsbeispiel auf der gleichen Seite der Drehachse 10 liegen. Es ist jedoch auch denkbar, bei entsprechender Anordnung des zweiten Drehzylinders 22 die Angriffspunkte 27 und 28 auf unterschiedlichen Seiten der Drehachse 10 anzuordnen. Der erste Drehzylinder 5 wie auch der zweite Drehzylinder 22 werden von zwei Steuerleitungen 29, 30 mit Drucköl versorgt, wobei diese Leitungen unmittelbar am zweiten Drehzylinder 22 angeschlossen sind. Die zum ersten Drehzylinder 5 führenden Leitungen 29, 30 sind an ein Steuerventil 31 angeschlossen, das in Abhängigkeit von der Lage des Pflugrahmens 13 relativ zum Pflugvordergestell 3 die zum ersten Drehzylinder führenden Leitungen 32, 33 jeweils mit der Steuerleitung 29 bzw. 30 verbindet und so den zweiten Hub des ersten Drehzylinders einleitet.

Bei Beginn der Wendung der Pflugkörper ist die das Druckmittel zuführende Leitung 30 mit dem Anschluß 34 des zweiten Drehzylinders 22 wie auch mit dem Anschluß 35 des ersten Drehzylinders 5 verbunden, wobei - abweichend von Fig. 2, welche eine Arbeitsstellung zeigt - das Ventil 31 noch senkrecht stehend zu denken ist. Während bei halber Drehung des Pflugrahmens der zweite Drehzylinder 22 erst die Hälfte seines maximalen Weges zurückgelegt hat, ist der erste Drehzylinder 5 bereits in seiner Totlage angelangt. Er muß jetzt umgesteuert werden, so daß die druckmittelführende Leitung 30 gemäß Fig. 3 über das waagrecht stehende Ventil 31 mit dem Anschluß 36 des ersten Drehzylinders 5 verbunden ist, während dessen Anschluß 35 nunmehr mit der Rückführleitung 29 in Verbindung steht.

In der halbgedrehten Stellung hat, wie dies aus Fig. 3 ersichtlich ist, der zweite Drehzylinder 22 seinen maximalen Hebelarm relativ zur Drehachse 10, so daß mit einem relativ kleinen Kraftbedarf und damit einem relativ kleinen zweiten Drehzylinder der erste Drehzylinder 5 und damit der Schwerpunkt des drehbaren Pflugteiles über seine Totpunktlage hinausgebracht werden kann, so daß dieser im Anschluß hieran wieder einen ausreichenden Hebelarm vorfindet, um die Drehung des Pflugrahmens 13 zu beenden. Da die Kurbelarme 9, 25 drehfest mit der Drehachse 10 verbunden sind, und darüberhinaus lediglich die Drehzylinder drehbar am feststehenden Teil des Pfluges wie auch am drehbaren befestigt sein müssen, hat die Einrichtung einen konstruktiv enifachen Aufbau und ist somit kostengünstig herzustellen.

In Fig. 2 ist gestrichelt dargestellt, daß an die Leitungen 32, 33, die zum ersten Drehzylinder 5 führen, Leitungen 38, 39 angeschlossen werden können, die den Verschiebezylinder 17 mit Drucköl versorgen, so daß die Drehbewegung wie auch die Verschiebung des Pflugrahmens 13 um das Gelenk 16 synchron zueinander erfolgen, so daß die benötigte Drehenergie durch Verschiebung des Schwerpunktes des Pflugrahmens in die Drehachse verringert wird.

## Patentansprüche

1. Vorrichtung zum Drehen des im Pflugvordergestell (3) gelagerten Pflugrahmens (13) eines Drehpfluges mittels mindestens zweier schwenkbar gelagerter, doppelt wirkender Drehzylinder (5, 22), die den Pflugrahmen von der einen Arbeitsstellung über die Totpunktlage in die andere Arbeitsstellung drehen und deren Angriffspunkte (6, 27; 26, 28) an den drehbaren und feststehenden Teilen des Pflugrahmens sowie des Pflugvordergestells so gewählt sind, daß in der Totpunktlage eines Drehzylinders der andere Drehzylinder einen Hebelarm hat, wobei der erste Drehzylinder nach etwa halber Drehung des Pflugrahmens seine Totpunktlage erreicht und umgesteuert wird, wobei in der Arbeitsstellung der Hebelarm der Drehachse (10), an dem der erste Drehzylinder (5) angreift, mit der Verlängerung der Anschlußpunkte des ersten Drehzylinders etwa einen rechten Winkel einschließt und wobei in der Arbeitsstellung die Anschlußpunkte (26, 28) des zweiten Drehzylinders (22) und die Drehachse (10) im wesentlichen in jeweils einer Totpunktlage liegen, dadurch gekennzeichnet, daß der Anschlußpunkt (28) des zweiten Drehzylinders (22) an der Drehachse (10) bzw. an einem drehfest mit ihr verbundenen Kurbelarm (9) stirnseitig an der Drehachse (10) angeschlossen ist oder einen diese umgreifenden Bügel aufweist.

2. Vorrichtung nach Anspruch 1, dadurch gekennzeichnet, daß die Anschlußpunkte (6, 26) des ersten und zweiten Drehzylinders (5, 22) an den drehfesten Teilen des Pflugvordergestells (3), bezogen auf die Drehachse (10) des Pflugrahmens (13), in im wesentlichen senkrecht zueinander liegenden Ebenen liegen.

3. Vorrichtung nach Anspruch 2, dadurch gekennzeichnet, daß die Anschlußpunkte der Drehzylinder (5, 22) an den Kurbelarmen (9, 25) in einer Ebene und auf der gleichen Seite der Drehachse (10) liegen.

4. Vorrichtung nach einem der Ansprüche 1 bis 3, dadurch gekennzeichnet, daß der erste (5) und der zweite Drehzylinder (22) an die gleichen Steuerleitungen (29, 30) angeschlossen sind und daß in die zum ersten Drehzylinder (5) führenden Leitungen (32, 33) ein Steuerventil (31) eingeschaltet ist, mit dem die zum ersten Drehzylinder (5) führenden Leitungen (32, 33) wahlweise mit den Steuerleitungen (29, bzw. 30) verbindbar sind.

5. Vorrichtung nach Anspruch 4, dadurch gekennzeichnet, daß die Umschaltung des Steuerventils (31) selbsttätig entweder unter Ausnutzung der Relativbewegung zwischen dem Pflugrahmen (13) und dem Pflugvordergestell (3) oder durch im Drehzylinder (5) angeordnete Schalteinrichtungen erfolgt.

6. Vorrichtung nach einem der Ansprüche 1 bis 5 für Drehpflüge, bei denen der Pflugrahmen (13) über ein Gelenk (16) relativ zum Pflugvordergestell schwenkbar ist und die Verschwenkung mittels eines Verschiebezylinders (17) erfolgt, dadurch gekennzeichnet, daß der Verschiebezylinder (17) doppelt wirkend ausgebildet ist und daß seine Druckmittelleitungen (38, 39) an den zu dem ersten Drehzylinder (5) führenden Leitungen (32, 33) angeschlossen sind.

## Claims

1. A device for turning the plough frame (13) which is mounted in the front plough support (3) of a turn-over plough, by means of at least two pivotably mounted double-acting rotary cylinders (5, 22) which turn the plough frame from the one working position, over the dead-centre position, into the other working position, and whose points of engagement (6, 27; 26, 28) on the rotating and the stationary parts of the plough frame and also of the front plough support are selected such that in the dead-centre position of one rotary cylinder, the other rotary cylinder has a lever arm and that after about a half-turn of the plough frame the first rotary cylinder reaches its dead-centre position and is reversed, whereby in the working position, the lever arm of the rotation axis (10), on which arm the first rotary cylinder (5) engages, forms an approximate right angle with the prolongation of the connection points of the first rotary cylinder, and whereby in the working position, the connection points (26, 28) of the second rotary cylinder (22) and the rotation axis (10) lie substantially in each case in a dead-centre position, characterised in that the connection point (28) of the second rotary cylinder (22) is connected on the rotation axis (10) or on a crank arm (9) which is fixedly connected thereto on the front side on the rotation axis (10), or has a curved bar which engages around the said rotation axis.

2. A device according to claim 1, characterised in that the connection points (6, 26) of the first and second rotary cylinder (5, 22) on the non-rotatable parts of the front plough support (3), in relation to the rotation axis (10) of the plough frame (13), lie in planes which are substantially perpendicular to one another.

3. A device according to claim 2, characterised in that the connection points of the rotary cylinders (5, 22) to the crank arms (9, 25) lie in one plane and on the same side of the rotation axis (10).

4. A device according to any one of the claims 1 to 3, characterised in that the first (5) and second (22) rotary cylinders are connected to the same control cables (29, 30), and in that built into the cables (32, 33) leading to the first rotary cylinder (5), there is a control valve (31) by means of which the cables (32, 33) leading to the first rotary cylinder (5) are optionally connectable with the control cables (29, and/or 30).

5. A device according to claim 4, characterised in that the reversing of the control valve (31) is performed automatically, either by making use of the relative movement between the plough frame (13) and the front plough support (3), or by means of switching devices arranged in the rotary cylinder (5).

6. A device according to any one of the claims 1 to 5, for turn-over ploughs, wherein the plough frame (13) is pivotable relative to the front plough support, by way of a joint (16), and the pivoting is performed by means of a sliding cylinder (17), characterised in that the sliding cylinder (17) is of double-acting construction, and in that its pressure-medium leads (38, 39) are connected to the cables (32, 33) which lead to the first rotary cylinder (5).

## Revendications

1. Dispositif destiné à faire tourner le cadre (13) de charrue monté dans le bâti avant de charrue (3) d'une charrue brabant au moyen d'au moins deux vérins à double action (5, 22), logés à pivotement, qui font tourner le cadre de charrure depuis une première position de travail vers l'autre position de travail en passant par une position de point mort, et dont les points d'application (6, 27; 26, 28) sur les parties rotatives et fixes du cadre de charrue ainsi que du bâti avant de charrue sont choisis de telle façon que, lorsqu'un vérin est en position de point mort, l'autre vérin agit avec un bras de levier, le premier vérin atteignant son point mort après environ une demie rotation du cadre de charrue et inversant alors le sens d'action, le bras de levier de l'arbre tournant (10) sur lequel agit le premier vérin (5) faisant, dans la position de travail, à peu près un angle droit avec la droite joignant les points d'attache du premier vérin; et les points d'attache (26, 28) du deuxième vérin (22), et l'axe de rotation (10) se trouvant, dans la position de travail, dans une situaton de point mort, caractérisé en ce que le point d'attache (28) du deuxième vérin (22) sur l'arbre tournant (10), ou sur un bras de manivelle (9) qui lui est lié sans pouvoir tourner, est relié à l'arbre tournant (10) sur la face frontale de celui-ci, ou présente un étrier qui entoure cette face.

2. Dispositif selon la revendication 1, caractérisé en ce que les points d'attache (6, 26) des premier et deuxième vérins (5, 22) sur les parties du bâti avant de charrure (3) fixes en rotation sont situés dans des plans passant par l'axe de rotation (10) du cadre de charrure (13) et disposés sensiblement perpendiculairement l'un à l'autre.

3. Dispositif selon la revendication 2, caractérisé en ce que les points d'attache des vérins (5, 22) aux manivelles de volant (9, 25) sont situés dans un même plan et du même côté de l'axe de rotation (10).

4. Dispositif selon l'une des revendications 1 à 3, caractérisé en ce que le premier (5) et le deuxième (22) vérins sont raccordés sur les mêmes conduites de commande (29, 30) et en ce, que dans les conduites (32, 33) menant au premier vérin (5), est insérée une valve de commande (31) par laquelle les conduites (32, 33) menant au premier vérin (5) peuvent à volonté être reliées à l'une ou l'autre des conduites de commande (29, ou 30).

5. Dispositif selon la revendication 4, caractérisé en ce que la commutation de la valve de commande (31) se produit de façon automatique soit en utilisant le déplacement relatif entre le cadre (13) de charrure et le bâti avant (3) de charrure, soit par des dispositifs de commutation dipsosés dans le vérin de commande de rotation (5).

6. Dispositif selon l'une des revendications 1 à 5 destiné à des charrures brabant dans lesquelles le cadre (13) de charrure peut pivoter par rapport au bâti avant de charrure grâce à une articulation (16), et le pivotement est effectué au moyen d'un vérin coulissant (17), caractérisé en ce que le vérin coulissant (17) est à double action et en ce que ses conduites de moyen de pression (38, 39) sont raccordées aux conduites (32, 33) conduisant au premier vérin de commande de rotation (5).

_Fig. 1_

Fig. 2

Fig. 3